## Europäisches Patentamt
## European Patent Office
## Office européen des brevets

(11) Veröffentlichungsnummer: **0 239 832**
**B1**

(12) **EUROPÄISCHE PATENTSCHRIFT**

(45) Veröffentlichungstag der Patentschrift:
23.05.90

(51) Int. Cl.⁵: **B27K 3/52**

(21) Anmeldenummer: 87103154.8

(22) Anmeldetag: 05.03.87

(54) Holzschutzmittel und Verfahren zu dessen Herstellung.

(30) Priorität: 27.03.86 DE 3610374

(43) Veröffentlichungstag der Anmeldung:
07.10.87 Patentblatt 87/41

(45) Bekanntmachung des Hinweises auf die Patenterteilung:
23.05.90 Patentblatt 90/21

(84) Benannte Vertragsstaaten:
AT BE CH DE ES FR GB GR IT LI LU NL SE

(56) Entgegenhaltungen:
BE-A- 843 301
DE-B- 2 140 051
US-A- 4 276 329

(73) Patentinhaber: DESOWAG Materialschutz GmbH,
Rossstrasse 76 Postfach 32 02 20,
D-4000 Düsseldorf 30(DE)

(72) Erfinder: Metzner, Wolfgang, Dr., Buschstrasse 151,
D-4150 Krefeld(DE)
Erfinder: Hiller, Johannes Chr., Dr., Vinhoverweg 50,
D-4044 Kaarst 2(DE)
Erfinder: Hellwig, Volker, Dr., Thiergartenstrasse 15,
D-4150 Krefeld 1(DE)

(74) Vertreter: Seiler, Siegfried, Langhansstrasse 6,
D-5650 Solingen 11(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die vorliegende Erfindung betrifft ein Holzschutzmittel und ein Verfahren zu dessen Herstellung, bestehend aus Borsäure, wasserlöslichem oder wasserlöslich gemachtem Borat, Polyborat oder einer borsäurebildenden Verbindung, vorzugsweise Orthoborsäure, Ammonium-, Alkaliborat und/oder Alkalipolyborat, in Gewichtsmengen von 0,1 bis 15 Gew.-%, vorzugsweise 0,3 bis 7 Gew.-%, und Wasser sowie ggf. einem Zusatzmittel, einem Lösungsmittel, einem Lösungsvermittler für Borsäure oder Borat, Farbstoffe und/oder Farbpigmente, wobei als Zusatzmittel bestimmte Gewichtsmengen eines Alkydharzes oder Alkydharzgemisches und/oder eines pflanzlichen und/oder tierischen Öles und eines Emulgators, Emulgatorgemisches und/oder Netzmittels, Netzmittelgemisches und/oder Emulgator-Netzmittelgemisches eingesetzt werden.

Aus der US-A 4 276 329 ist bereits ein Verfahren zur Behandlung von Holz zur Verbesserung dessen Eigenschaften, insbesondere zur feuerhemmenden Behandlung von Holz, bekannt, wobei das Holz mit einer Flüssigkeit, die ein wasserverdünnbares oder wasserlösliches Kunstharz, mit Molekülen von einem Molekulargewicht von weniger als etwa 1000 und vorzugsweise einem zusätzlichen Anteil von Kunstharzmolekülen von 20 bis 200 000 (Molekulargewicht) in einem wassermischbaren, vorzugsweise wasserlöslichen polaren Lösungsmittel durch Stabilisierung der Holzoberflächenzellen behandelt wird und das wasserlösliche Kunstharz unter Umgebungsbedingungen in eine wasserunlösliche Form umgewandelt wird. Als wasserverdünnbare Harze werden u.a. wasserlösliche Acrylharze, Vinylpolymere und wasserlösliche oder wasserverdünnbare Alkydharze eingesetzt.

Die sauren Gruppen der Alkydharze werden vorher durch Amin oder Ammoniak neutralisiert. Als Zusatzmittel können unterschiedliche Mittel zugefügt werden, zu denen u.a. auch Borat zur feuerhemmenden Behandlung gehört. Die Verwendung erfolgt ohne Emulgatoren oder Netzmittel.

Gemäß US-A 4 276 329, Spalte 6, Zeilen 15 bis 20, müssen bei dem Einsatz von Boraten in höheren Konzentrationen Vorbehandlungen erfolgen, dergestalt, daß zunächst eine wäßrige Boratlösung als Vorbehandlungsmittel auf das Holz aufgebracht wird und erst danach das bindemittelhaltige Behandlungsmittel eingesetzt werden kann, um überhaupt eine entsprechende Boratmenge auf das Holz aufzubringen. Darüber hinaus ist die Eindringtiefe des Mittels unzureichend.

Aus der DE-B 2 644 077 ist ein Holzschutzmittel auf der Basis ölartiger Lösungsmittel ohne jede Mitverwendung von Wasser, Emulgatoren, Boraten und dgl. zu ersehen. Die in diesen Mitteln eingesetzten Insektizide und Fungizide sind nicht wasserlöslich. Die anderen Eigenschaften und Zusammensetzungen dieser Holzschutzmittel lassen sich nicht auf wasserhaltige und emulgatorhaltige Konservierungsmittelsysteme übertragen.

Gemäß EP-A 0 008 606 werden dem Konservierungsmittel zusätzlich mehrere Säuren, vorzugsweise mittelstarke anorganische Säuren oder deren sauer reagierenden Ester, nämlich gemäß Seite 3, Zeilen 16 bis 19 Phosphorsäure, vorzugsweise Orthophosphorsäure oder deren partielle sauer reagierende Ester eingesetzt.

Ein Zusatz dieser Verbindung führt bei bestimmten Holzschutzmitteln zur Löslichkeitsverringerung oder kann je nach Konzentration Ausfällungen des Mittels hervorrufen.

Aus der DE-PS 2 140 051 ist weiterhin ein flüssiges Konzentrat mit einem hohen Gehalt an Borsäure zur Herstellung von Holz und Flammschutzmitteln bekannt, wobei das Konzentrat Borsäure, gelöst in einem wasserlöslichen Amin oder Polyamin oder in Mischungen von wasserlöslichen Aminen oder Polyaminen, enthält.

Die nach diesem Patent hergestellten Holz- und Flammenschutzmittel lassen sich auch als Anstriche verwenden. Nach dem Aufstreichen oder Aufsprühen auf Holz oder andere zu schützende Gegenstände bildet sich ein lackartiger Überzug, der bei einem Beflammen aufbläht und eine flammenhemmende poröse Borsäureanhydrid-Kohlenstoffschicht entstehen läßt. Als Zusätze sind Pigmente, z.B. Titandioxyd und Vermiculit geeignet, um Färbungen und/oder das Aufblähen und damit die Flammenschutzwirkung weiter zu verbessern.

Ein Nachteil dieser wirksamen Konzentrate besteht darin, daß die Fixierung im Holz, z.B. bei Bewitterung unzureichend ist und der Borgehalt je nach Niederschlag (z.B. Regen) erheblich abnehmen kann und die Gefahr eines unzureichenden Holzschutzes gegeben ist.

Ziel und Aufgabe der vorliegenden Erfindung war es, ein Holzschutzmittel bestehend aus Borsäure, wasserlöslichem oder wasserlöslich gemachtem Borat, Polyborat oder einer borsäurebildenden Verbindung, vorzugsweise Orthoborsäure, Ammonium-, Alkaliborat mit verbesserten Eigenschaften oder Wirkungen zu finden.

So sollten insbesondere eine bessere Fixierung und eine Verminderung der Auswaschbarkeit des Holzschutzmittels mit einer gewissen Eindringtiefe des Mittels erreicht werden.

Erfindungsgemäß wurde festgestellt, daß diesen Zielen und Aufgaben ein Holzschutzmittel bestehend aus Borsäure, wasserlöslichem oder wasserlöslich gemachtem Borat, Polyborat oder einer borsäurebildenden Verbindung, vorzugsweise Orthoborsäure, Ammonium-, Alkaliborat und/oder Alkalipolyborat, in Gewichtsmengen von 0,1 bis 15 Gew.-%, vorzugsweise 0,3 bis 7 Gew.-%, und Wasser sowie ggf. einem Zusatzmittel, einem Lösungsmittel, einem Lösungsvermittler für Borsäure oder Borat, Farbstoffe und/oder Farbpigmente, gerecht wird. Das Mittel enthält gemäß der Erfindung als Zusatzmittel 1 bis 35 Gew.-%, vorzugsweise 3 bis 25 Gew.-% (berechnet als Feststoff und bezogen auf das anwendungsfertige Holzschutzmittel), eines in wasserunlöslichen, organisch-chemischen Lösungsmitteln löslichen Alkydharzes oder Alkydharzgemisches mit einer Säurezahl (gemessen nach DIN 53 402) zwischen 1 – 45, vorzugsweise 2 – 20, einer Öllänge von 30 – 75, vorzugsweise 40 – 70, und einem Phthalsäureanteil zwischen 20 – 40 Gew.-%, vorzugsweise 25 – 35 Gew.-% (bezogen auf 100 Gew.-% Alkydharz oder Alkydharzgemisch), und/oder eines pflanzlichen und/oder tierischen Öles, 1,5 bis 12 Gew.-%, vorzugsweise 2,5 bis 7 Gew.-%, eines Emulgators, Emulgatorgemisches und/oder Netzmittels, Netzmittelgemisches und/oder Emulgator-Netzmittelgemisches, 0,05 bis 5 Gew.-%, vorzugsweise 0,1 bis 3 Gew.-%, Ammoniak und/oder mindestens eines wasserlöslichen aliphatischen Amins oder Polyamins und/oder mindestens eines ein- oder mehrwertigen Alkohols und/oder eines Alkoxiamins oder Alkanolamins und als Restbestandteil (berechnet auf 100 Gew.-% anwendungsfertiges Holzschutzmittel) ein Lösungsmittelgemisch aus Wasser und einem wasserunlöslichen, organisch-chemischen Lösungsmittel oder Lösungsmittelgemisch im Gewichtsverhältnis 25 : 1 bis 1 : 25, vorzugsweise 10 : 1 bis 1 : 10, enthält.

Unter Verwendung dieses Holzschutzmittels wird eine bessere Fixierung und somit auch eine Verminderung der Auswaschbarkeit des mit dem Holzschutzmittel behandelten Holz erzielt.

Das Holzschutzmittel enthält weiterhin nach einer bevorzugten Ausführungsform 0,05 bis 1,2 Gew.-%, vorzugsweise 0,1 bis 0,8 Gew.-%, mindestens eines Sikkatives, um den Trockenvorgang zu beschleunigen.

Nach einer bevorzugten Ausführungsform enthält das Holzschutzmittel als Zusatzmittel zusätzlich 0,5 bis 2,5 mol, vorzugsweise 1 bis 2 mol, bezogen auf ein Mol Boraäteil (d.h. berechnet als Bor), einer mit Borsäure oder Borat komplexbildenden, vorzugsweise multifunktionellen Hydroxycarbonsäure. Dabei werden bevorzugt Salicylsäure, Zitronensäure und/oder Weinsäure eingesetzt. Bei dieser Ausführungsform gelingt es, die Eindringtiefe und/oder die Wirkung des Mittels zu verbessern.

Gemäß einer weiteren bevorzugten Ausführungsform der Erfindung enthält das Holzschutzmittel 0,05 bis 5 Gew.-%, vorzugsweise 0,1 bis 3 Gew.-%, Ammoniak und/ oder mindestens eines wasserlöslichen aliphatischen Amins oder Polyamins und/oder mindestens eines ein- oder mehrwertigen Alkohols und/oder eines Alkoxiamins oder Alkanolamins. Vorzugsweise werden dabei Verbindungen mit $C_2$ bis $C_8$ eingesetzt.

Um die Schutzwirkung des erfindungsgemäßen Holzschutzmittels zu verstärken, enthält das Holzschutzmittel nach einer bevorzugten Ausführungsform 0,001 bis 10 Gew.-%, vorzugsweise 0,1 bis 7 Gew.-%, eines organisch-chemischen Biozides oder Biozidgemisches. Derartige Holzschutzmittel weisen eine erhöhte Langzeitwirkung auch bei stärkerer Bewitterung auf.

Nach einer Ausführungsform besteht das im Holzkonservierungsmittel enthaltene organisch-chemische Biozid oder Biozidgemisch aus mindestens einem insektiziden Phosphorsäureester, Thiophosphorsäureester, Dithiophosphorsäureester, Thionophosphorsäureester, einem chlorierten Kohlenwasserstoff und/oder Carbamat, vorzugsweise einem Pyrethroid als Insektizid oder enthält eine Kombination von mindestens einem anderen in dem organisch-chemischen Lösungsmittel löslichen Insektiziden mit einem oder mehreren der genannten Insektiziden, vorzugsweise mit einem oder mehreren Pyrethroiden.

Als Pyrethroid oder Pyrethroidgemisch sind vorzugsweise Permethrin, Decamethrin, Cypermethrin, Alphamethrin, Cyano-(4-fluoro-3-phenoxy-phenyl)-methyl-3-(2,2-dichloroethenyl)-2,2-dimethyl-cyclopropancarboxylat und/oder ((Pentafluorphenyl)-methyl))-1R, 3R-3-(2,2-di-chlorethenyl)-2,2-dimethylcyclopropancarboxylat oder Gemischen von einem oder mehreren dieser Verbindungen mit anderen Insektiziden im Holzkonservierungsmittel, vorzugsweise Holzschutzanstrichmittel enthalten.

Bevorzugt werden als organisch-chemische Biozide Thiocyanomethylthiobenzothiazol (TCMTB), Jodpropenylbutylcarbamat, Isothiazolone sowie Methyl-1H-benzimidazol-2-ylcarbamat als bläuewidrige Komponenten verwendet.

Nach einer anderen bevorzugten Ausführungsform besteht das im Holzkonservierungsmittel enthaltene Biozid aus einem Fungizid, das aus Methylen-bis-thiocyanat, 3,4,5,6-Tetrachlor-Phthalsäuredinitril, Jodpropargylalkohol, 1-(4-Chlorphenoxy)-3,3-dimethyl-1-(1H-1,2,4-triazol-1-yl)-2-butanon), Tris(N-Cyclohexyl-Diazeniumdioxi)-Aluminium, fungiziden Tributylzinnverbindungen, 2,6-Dimethyl-4-tridecylmorpholin und/oder 1-2-(2,4-dichlorophenyl)-1,3-dioxolan-2-ylmethyl-1H-1,2,4-triazol und/oder N-(Dichlorfluormethylthio)-3,6-endomethylen-Delta 4-tetrahydrophthalimid als Fungizid oder Fungizidgemisch, vorzugsweise aus 2-Methoxycarbonyl-aminobenzimidazol und/oder 2,5-Dimethyl-N-cyclohexyl-N-methoxy-3-furancarbonsäureamid, besteht oder ein oder mehrere der Fungizide oder Fungizidgemische, enthält. Bei diesen Fungiziden oder Fungizidkombinationen werden unter Verwendung des erfindungsgemäßen Holzschutzmittels oder Holzkonservierungsmittels besonders gute Wirkungen zur Verhinderung des Befalles holzzerstörender Pflanzen, insbesondere holzzerstörender Pilze und dgl. erzielt.

Nach einer weiteren bevorzugten Ausführungsform enthält das wasserunlösliche, organisch-chemische Lösungsmittelgemisch mindestens ein aliphatisches Lösungsmittel oder Lösungsmittelgemisch, vorzugsweise auf der Basis mindestens eines aliphatischen Kohlenwasserstoffes und mindestens ein aromatisches Lösungsmittel oder Lösungsmittelgemisch im Gewichtsverhältnis 7 : 1 bis 1 : 4, vorzugsweise 5, 5 : 1 bis 1 : 1.

Der Restbestandteil des Holzschutzmittels besteht aus den vorgenannten Bestandteilen, aus Wasser sowie ggf. Farbstoffen und/oder Pigmenten.

Als wasserunlösliche organisch-chemische schwerflüchtige Lösungsmittel oder Lösungsmittelgemische werden die an sich bekannten aromatischen und/oder aliphatischen Kohlenwasserstoffe oder Gemische derselben eingesetzt. Nach einer Ausführungsform werden solche Lösemittel oder Lösemittelgemische verwendet, die eine Oberflächenspannung von 16 bis 37 mN/m, vorzugsweise 17 bis 35 mN/m, (gemessen bei 20°C) aufweist und/oder die eine elektrische Leitfähigkeit von $10^{-10} - 0^{-16}$ ohm bei 20° besitzen.

Bevorzugt werden wasserunlösliche, organisch-chemische Lösungsmittel oder Lösungsmittelgemische eingesetzt, die schwerflüchtig sind, eine Verdunstungszahl über 35 und einen Flammpunkt oberhalb 50°C aufweisen. Beispiele für derartige Lösungsmittel sind entsprechende Mineralöle oder deren Aromatenfraktionen, mineralölhaltige Lösungsmittelgemische, vorzugsweise Testbenzin und/oder Alkylbenzole.

Nach einer weiteren bevorzugten Ausführungsform werden organische, in der Natur vorkommende Lösungsmittel oder Lösungsmittelgemische als teilweiser oder vollständiger Ersatz für die organisch-chemischen Lösungsmittel eingesetzt, vorzugsweise Terpene, Limonen, Dipenten und/oder Terpentinöl.

Als Pigmente oder Farbstoffe werden die an sich bekannten anorganischen Metalloxidpigmente und/oder organische Pigmente oder Farbstoffe, wie z.B. Phthalocyanine, Monoazopigmente, Ruß und dgl. verwendet, wobei die Pigmente und/oder Farbstoffe an sich oder in deren handelsüblichen Form, z.B. gießfähige oder pastöse Zubereitungen, Pasten, Pulvern und dgl. eingesetzt werden können.

Nach einer bevorzugten Ausführungsform besteht das Holzschutzmittel aus 0,1 bis 15 Gew.-%, vorzugsweise 0,3 bis 7 Gew.-%, Borsäure, wasserlöslichem oder wasserlöslich gemachtem Borat, Polyborat oder einer borsäurebildenden Verbindung, vorzugsweise Orthoborsäure, Ammonium-, Alkaliborat und/oder Alkalipolyborat, 1 bis 35 Gew.-%, vorzugsweise 3 bis 25 Gew.-%, eines pflanzlichen, ungesättigten Öles, vorzugsweise Leinöl und/oder Sojaöl, 1, 5 bis 12 Gew.-%, vorzugsweise 2,5 bis 7 Gew.-%, eines Emulgators, Emulgatorgemisches und/oder Netzmittels, Netzmittelgemisches und/oder Emulgator-Netzmittelgemisches und als Restbestandteil Wasser sowie gegebenenfalls 0,05 bis 1,2 Gew.-%, vorzugsweise 0,1 bis 0,8 Gew.-%, mindestens eines Sikkatives und/ oder 0,05 bis 5 Gew.-%, vorzugsweise 0,1 bis 3 Gew.-%, Ammoniak und/oder mindestens eines wasserlöslichen aliphatischen Amins oder Polyamins und/oder mindestens eines ein- oder mehrwertigen Alkohols und/oder eines Alkoxiamins oder Alkanolamins und gegebenenfalls Farbstoffe und/oder Farbpigmente.

Das in dem Holzkonservierungsmittel, vorzugsweise Holzschutzanstrichmittel, enthaltende Alkydharz oder Alkydharzgemisch ist in wasserunlöslichen, organisch-chemischen Lösungsmitteln löslich und weist eine Säurezahl (gemessen nach DIN 53 402) zwischen 1 – 45, vorzugsweise 2 – 20, eine Öllänge von 30 – 75, vorzugsweise 40 – 70, und einen Phthalsäureanteil zwischen 20 – 40 Gew.-%, vorzugsweise 25 – 35 Gew.-% bezogen auf 100 Gew.-% Alkydharz oder Alkydharzgemisch auf.

Nach einer bevorzugten Ausführungsform besteht der Emulgator oder das Emulgatorgemisch bzw. Netzmittel oder Netzmittelgemisch mindestens aus Carbonsäurepolyglykolester und/oder einem Polyoxyethylenderivat und/oder einem Polyalkylen- oder Polyalkylglykoläther oder -ester, und/oder einer, eine oder mehrere Polyoxyethylengruppen und/oder ein oder mehrere Fettsäuregruppen enthaltenden oberflächenaktiven organisch-chemischen Verbindung sowie gegebenenfalls aus einem Alkylarylsulfonat, einem Derivat der Alkylarylsulfonsäure.

Nach einer anderen Ausführungsform ist in dem Holzschutzanstrichmittel oder Holzkonservierungsmittel ein Emulgatorgemisch enthalten, das aus einem Gemisch von Polyoxyethylen(30)-Nonylphenol und/oder Polyalkylenglykolester und/oder Carbonsäurepolyglykolester besteht. Bei einem Gemisch von Polyoxy-ethylen(30)-Nonylphenol und Polyalkylglykoläther wird im allgemeinen ein Gewichtsverhältnis 5 : 1 bis 1 : 5, vorzugsweise 2 : 1 bis 1 : 2, eingehalten.

Nach einer anderen bevorzugten Ausführungsform besteht der Emulgator aus einem Gemisch von Carbonsäurepolyglykolester und Alkylarylpolyglykoläther. Bei diesem Gemisch wird ein Gewichtsverhältnis 10 : 1 bis 1 : 5, vorzugsweise 2 : 1 bis 1 : 2, eingehalten.

Die Erfindung betrifft weiterhin ein Verfahren zur Herstellung eines Holzschutzmittels, vorzugsweise Holzzchutzanstrichmittels. Dabei werden bei einer Arbeits- oder Verfahrenstemperatur von 278 K – 360 K, vorzugsweise 280 K – 310 K, in einem schnellaufenden Mischaggregat, vorzugsweise einem Schnellrührer, Dissolver, einer Kolloidmühle oder einem Dispergator, das Alkydharz oder Alkydharzgemisch und/oder das pflanzliche oder tierische Ö l oder Ölgemisch in einem Lösungs- oder Lösungsmittelgemisch und/oder in Wasser (ölige Phase) mit den Bestandteilen der wäßrigen Phase, vorzugsweise bestehend aus Borsäure, wasserlöslichen oder wasserlöslich gemachtem Borat, Polyborat oder einer Borsäure bildenden Verbindung, sowie gegebenenfalls einem Zusatzmittel, Lösungsvermittler, Zusatzmitteln, Hydroxycarbonsäuren und/oder anderen Zusatzstoffen und/oder Wasser, vermischt, wobei der Emulgator, das Emulgatorgemisch und/oder das Netzmittel, Netzmittelgemisch und/oder Emulgator-Netzmittelgemisch sowie Farbstoffe und/oder Farbpigmente in einer oder den beiden Phasen gelöst oder homogen bzw. nahezu homogen verteilt werden.

Die Durchmischung wird vorzugsweise mit einer derartigen Geschwindigkeit (bezogen auf den jeweiligen Abstand des Rührwerks von der Kesselwand und dem Radius des Rührwerkes) und so lange durchgeführt, bis die Verteilung der emulgierten Harzteilchen einen mittleren Durchmesser im Bereich von 0,1 – 15 µm, vorzugsweise 0,5 – 4 µm, erreicht hat.

Die Durchmischung wird bevorzugt mit einer Rand- und/oder Umfangsgeschwindigkeit von 10 – 40 m/sec., vorzugsweise 15 – 30 m/sec., durchgeführt. Das Wasser oder die wäßrige Phase wird dabei mit einer Zuführungsgeschwindigkeit von 10 – 100 l/min., vorzugsweise 30 – 70 l/min., in die ölige oder ölartige Phase (wasserunlösliches, organisch-chemisches Lösungsmittel und darin gelöste Bestandteile), die in dem Mischbehälter vorgelegt sind, eingeleitet.

Der Durchmesser der Scheibe oder des Rührers beträgt nach einer Ausführungsform 1/4 d bis 3/4 d (d = Durchmesser des Mischbehälters bzw. Kessels), vorzugsweise 0,3 d – 0,4 d.

Bei der Verwendung einer Kolloidmühle erfolgt die Zuleitung von zwei oder mehreren Bestandteilen des Holzschutzmittels oder des gesamten Holzschutzmittels über eine Dosierpumpe, wobei das Verhältnis der öligen Phase zu der wäßrigen Phase mit Tensid (Emulgator und/oder Netzmittel) bzw. öligen Phase mit Tensid zu der wäßrigen Phase

20 : 1 bis 1 : 1, vorzugsweise

5 : 1 bis 2 : 1, beträgt.

Beispiele

Beispiel 1:

| Alkydharz | 17,0 Gew.-% |
|---|---|
| Kohlenwasserstofflösemittel | 44,0 Gew.-% |
| Pigmente und/oder Farbstoffe | 1,5 Gew.-% |
| Netzmittel | 0,5 Gew.-% |
| Sikkative | 0,2 Gew.-% |
| Carbonsäureemulgator auf der Basis von Alkylarylpolyglykoläther | 4,0 Gew.-% |
| Ammoniak (25% wässrige Lösung) | 0,9 Gew.-% |
| wasserunlösliche Biozide | 0,2 Gew.-% |
| Borsäure | 4,0 Gew.-% |
| Wasser | 27,7 Gew.-% |

Beispiel 2:

| Alkydharz | 14,0 Gew.-% |
|---|---|
| Kohlenwasserstofflösemittel | 31,0 Gew.-% |
| Pigmente und/oder Farbstoffe | 1,5 Gew.-% |
| Netzmittel | 0,5 Gew.-% |
| Sikkative | 0,2 Gew.-% |
| Carbonsäureemulgator auf der Basis von Alkylarylpolyglykoläther | 6,0 Gew.-% |
| Ammoniak (25% wässrige Lösung) | 0,9 Gew.-% |
| wasserunlösliche Biozide | 0,2 Gew.-% |
| Borsäure | 4,0 Gew.-% |
| Wasser | 41,7 Gew.-% |

Beispiel 3:

| Alkydharz | 12,0 Gew.-% |
|---|---|
| Kohlenwasserstofflösemittel | 41,0 Gew.-% |
| Sikkative | 0,1 Gew.-% |
| Carbonsäureemulgator auf der Basis vonAlkylarylpolyglykoläther | 4,5 Gew.-% |
| Triethanolamin | 0,1 Gew.-% |
| wasserunlösliche Biozide | 4,2 Gew.-% |
| Natriumpolyborat | 3,0 Gew.-% |
| Wasser | 35,1 Gew.-% |

EP 0 239 832 B1

**Patentansprüche**

1. Holzschutzmittel bestehend aus Borsäure, wasserlöslichem oder wasserlöslich gemachtem Borat, Polyborat oder einer borsäurebildenden Verbindung, vorzugsweise Orthoborsäure, Ammonium-, Alkaliborat und/oder Alkalipolyborat, in Gewichtsmengen von
0,1 bis 15 Gew.-%, vorzugsweise
0,3 bis 7 Gew.-%,
und Wasser sowie ggf. einem Zusatzmittel, einem Lösungsmittel, einem Lösungsvermittler für Borsäure oder Borat, Farbstoffe und/oder Farbpigmente, dadurch gekennzeichnet, daß das Mittel als Zusatzmittel
1 bis 35 Gew.-%, vorzugsweise
3 bis 25 Gew.-% (berechnet als Feststoff)
eines in wasserunlöslichen, organisch-chemischen Lösungsmitteln löslichen Alkydharzes oder Alkydharzgemisches mit einer Säurezahl (gemessen nach DIN 53 402) zwischen 1–45, vorzugsweise 2–20, einer Öllänge von 30–75, vorzugsweise 40–70, und einem Phthalsäureanteil zwischen 20–40 Gew.-%, vorzugsweise 25–35 Gew.-% (bezogen auf 100 Gew.-% Alkydharz oder Alkydharzgemisch), und/oder eines pflanzlichen und/oder tierischen Öles,
1, 5 bis 12 Gew.-%, vorzugsweise
2, 5 bis 7 Gew.-%,
eines Emulgators, Emulgatorgemisches und/oder Netzmittels, Netzmittelgemisches und/oder Emulgator-Netzmittelgemisches,
0,05 bis 5 Gew.-%, vorzugsweise
0,1 bis 3 Gew.-%,
Ammoniak und/oder mindestens eines wasserlöslichen aliphatischen Amins oder Polyamins und/oder mindestens eines ein- oder mehrwertigen Alkohols und/oder eines Alkoxiamins oder Alkanolamins und als Restbestandteil (berechnet auf 100 Gew.-% anwendungsfertiges Holzschutzmittel) ein Lösungsmittelgemisch aus Wasser und einem wasserunlöslichen, organisch-chemischen Lösungsmittel oder Lösungsmittelgemisch im Gewichtsverhältnis 25:1 bis 1:25, vorzugsweise 10:1 bis 1:10, enthält.

2. Holzschutzmittel nach Anspruch 1, dadurch gekennzeichnet, daß das Holzschutzmittel
0,05 bis 1,2 Gew.-%, vorzugsweise
0,1 bis 0,8 Gew.-%,
mindestens eines Sikkatives enthält.

3. Holzschutzmittel nach einem oder mehreren der Ansprüche 1 und 2, dadurch gekennzeichnet, daß das wasserunlösliche organisch-chemische Lösungsmittelgemisch mindestens ein aliphatisches Lösungsmittel oder Lösungsmittelgemisch, vorzugsweise auf der Basis mindestens eines aliphatischen Kohlenwasserstoffes, und mindestens ein aromatisches Lösungsmittel oder Lösungsmittelgemisch im Gewichtsverhältnis
7:1 bis 1:4, vorzugsweise
5,5:1 bis 1:1,
enthält.

4. Holzschutzmittel nach einem oder mehreren der Ansprüche 1 bis 3, dadurch gekennzeichnet, daß das Mittel als Zusatzmittel
0,5 bis 2,5 mol, vorzugsweise
1 bis 2 mol
auf ein Mol Boranteil (d.h. berechnet als Bor) einer mit Borsäure oder Borat komplexbildenden, vorzugsweise multifunktionellen Hydroxycarbonsäure, zusätzlich enthält.

5. Holzschutzmittel nach einem oder mehreren der Ansprüche 1 bis 4, dadurch gekennzeichnet, daß das Holzschutzmittel
0,001 bis 10 Gew.-%, vorzugsweise
0,1 bis 7 Gew.-%,
eines organisch-chemischen Biozides oder Biozidgemisches enthält.

6. Holzschutzmittel nach einem oder mehreren der Ansprüche 1 bis 5, dadurch gekennzeichnet, daß das Mittel
1 bis 35 Gew.-%, vorzugsweise
3 bis 25 Gew.-%,
eines pflanzlichen, ungesättigten Öles, vorzugsweise Leinöl und/oder Sojaöl,
1,5 bis 12 Gew.-%, vorzugsweise
2,5 bis 7 Gew.-%,
eines Emulgators, Emulgatorgemisches und/oder Netzmittels, Netzmittelgemisches und/oder Emulgator-Netzmittelgemisches, und als Restbestandteil Wasser sowie gegebenenfalls Farbstoffe und/oder Farbpigmente enthält.

7. Holzschutzmittel nach einem oder mehreren der Ansprüche 1 bis 6, dadurch gekennzeichnet, daß das Holzschutzmittel als Hydroxycarbonsäure Salicylsäure, Citronensäure und/oder Weinsäure enthält.

8. Verfahren zur Herstellung eines Holzschutzmittels, nach einem oder mehreren der Ansprüche 1 bis 9, dadurch gekennzeichnet, daß bei einer Arbeits- oder Verfahrenstemperatur von

6

278 K – 360 K, vorzugsweise
280 K – 310 K,
in einem schnellaufenden Mischaggregat, vorzugsweise einem Schnellrührer, Dissolver, einer Kolloidmühle oder einem Dispergator, das Alkydharz oder Alkydharzgemisch und/oder das pflanzliche oder tierische Öl oder Ölgemisch in einem Lösungs- oder Lösungsmittelgemisch und/oder in Wasser (ölige Phase) mit den Bestandteilen der wäßrigen Phase, vorzugsweise bestehend aus Borsäure, wasserlöslichen oder wasserlöslich gemachtem Borat, Polyborst oder einer Borsäure bildenden Verbindung, sowie gegebenenfalls einem Zusatzmittel, Lösungsvermittler, Zusatzmitteln, Hydroxycarbonsäuren und/oder anderen Zusatzstoffen und/oder Wasser, vermischt werden, wobei der Emulgator, das Emulgatorgemisch und/oder das Netzmittel, Netzmittelgemisch und/oder Emulgator/Netzmittelgemisch sowie Farbstoffe und/oder Farbpigmente in einer oder den beiden Phasen gelöst oder homogen bzw. nahezu homogen verteilt wird.

9. Verfahren nach Anspruch 8, dadurch gekennzeichnet, daß die Durchmischung mit einer derartigen Geschwindigkeit (bezogen auf den jeweiligen Abstand des Rührwerks von der Kesselwand und dem Radius des Rührwerkes) und so lange durchgeführt wird, bis die Verteilung der emulgierten Harzteilchen einen mittleren Durchmesser im Bereich von
0,1–15 µm, vorzugsweise
0,5–4 µm,
erreicht hat.

10. Verfahren nach Ansprüchen 8 und 9, dadurch gekennzeichnet, daß die Durchmischung mit einer Rand und/oder Umfangsgeschwindigkeit von
10–40 m/sec., vorzugsweise
15–30 m/sec.,
durchgeführt wird.

11. Verfahren nach einem oder mehreren der Ansprüche 8 bis 10, dadurch gekennzeichnet, daß das Wasser oder die wäßrige Phase mit einer Zuführungsgeschwindigkeit von
10–100 l/min., vorzugsweise
30–70 l/min.,
in die ölige oder ölartige Phase (wasserunlösliches, organisch-chemisches Lösungsmittel und darin gelöste Bestandteile), die in dem Mischbehälter vorgelegt sind, eingeleitet wird.

12. Verfahren nach einem oder mehreren der Ansprüche 8 bis 11, dadurch gekennzeichnet, daß der Durchmesser der Scheibe oder des Rührers 1/4 d bis 3/4 d (d = Durchmesser des Mischbehälters bzw. Kessels), vorzugsweise 0,3 d – 0,4 d, beträgt.

13. Verfahren nach einem oder mehreren der Ansprüche 8 bis 12, dadurch gekennzeichnet, daß bei der Verwendung einer Kolloidmühle die Zuleitung von zwei oder mehreren Bestandteilen des Holzschutzmittels oder des gesamten Holzschutzmittels über eine Dosierpumpe erfolgt, wobei das Verhältnis der öligen Phase zu der wäßrigen Phase mit Tensid (Emulgator und/oder Netzmittel) bzw. öligen Phase mit Tensid zu der wäßrigen Phase
20:1 bis 1:1, vorzugsweise
5:1 bis 2:1,
beträgt.

**Claims**

1. Wood protection agent consisting of boric acid, borate, polyborate or a compound forming boric acid, preferably orthoboric acid, ammonium borate, alkali borate and/or alkali polyborate, which is water-soluble or has been made water-soluble, in amounts by weight of
0.1 to 15% by weight, preferably
0.3 to 7% by weight,
and water, and also optionally an additive, a solvent, a solubiliser for boric acid or borate, dyes and/or colour pigments, characterised in that the agent contains as an additive
1 to 35% by weight, preferably
3 to 25% by weight (calculated as a solid)
of an alkyd resin or alkyd resin mixture which is soluble in water-insoluble, organic-chemical solvents and has an acid number (measured in accordance with DIN 53, 402) of between 1–45, preferably 2–20, an oil length of 30–75, preferably 40–70, and a content of phthalic acid of between 20–40% by weight, preferably 25–35% by weight (relative to 100% by weight alkyd resin or alkyd resin mixture), and/or a vegetable and/or animal oil,
1.5 to 12% by weight, preferably
2.5 to 7% by weight,
of an emulsifier, emulsifier mixture and/or wetting agent, wetting agent mixture and/or emulsifier/wetting agent mixture,
0.05 to 5% by weight, preferably
0.1 to 3% by weight,
ammonia and/or at least one water-soluble aliphatic amine or polyamine and/or at least one monohydric or polyhydric alcohol and/or an alkoxyamine or alkanolamine,
and as the remaining constituent (calculated per 100% by weight ready-to-use wood protection agent) a solvent mixture of water and a water-insoluble, organic-chemical solvent or solvent mixture in a weight ratio of 25 : 1 to 1:25, preferably 10:1 to 1:10.

2. Wood protection agent according to Claim 1, characterised in that the wood protection agent contains
0.05 to 1.2% by weight, preferably
0.1 to 0.8% by weight,
of at least one siccative.

3. Wood protection agent according to one or more of Claims 1 and 2, characterised in that the waterinsoluble organic-chemical solvent mixture contains at least one aliphatic solvent or solvent mixture, preferably on the basis of at least one aliphatic hydrocarbon, and at least one aromatic solvent or solvent mixture in a weight ratio of
7:1 to 1:4, preferably
5.5:1 to 1:1.

4. Wood protection agent according to one or more of Claims 1 to 3, characterised in that the agent additionally contains as an additive
0.5 to 2.5 mol, preferably
1 to 2 mol,
per one mol boron content (i.e calculated as boron) of a preferably multi-functional hydroxy carboxylic acid which forms a complex with boric acid or borate.

5. Wood protection agent according to one or more of Claims 1 to 4, characterised in that the wood protection agent contains
0.001 to 10% by weight, preferably
0.1 to 7% by weight,
of an organic-chemical biocide or biocide mixture.

6. Wood protection agent according to one or more of Claims 1 to 5, characterised in that the agent contains
1 to 35% by weight, preferably
3 to 25% by weight,
of an unsaturated vegetable oil, preferably linseed oil and/or soya oil,
1.5 to 12% by weight, preferably
2.5 to 7% by weight,
of an emulsifier, emulsifier mixture and/or wetting agent, wetting agent mixture and/or emulsifier/wetting agent mixture, and as the remaining constituent water and optionally dyes and/or colour pigments.

7. Wood protection agent according to one or more of Claims 1 to 6, characterised in that the wood protection agent contains salicylic acid, citric acid and/or tartaric acid as a hydroxy carboxylic acid.

8. Method for the production of a wood protection agent according to one or more of Claims 1 to 9, characterised in that the alkyd resin or alkyd resin mixture and/or the vegetable or animal oil or oil mixture in a solvent or solvent mixture and/or in water (oily phase) are mixed with the constituents of the aqueous phase, preferably consisting of boric acid, borate, polyborate or a compound forming boric acid which is water-soluble or has been made water-soluble, and optionally an additive, solubiliser, additives, hydroxy carboxylic acids and/or other additives and/or water at an operating or process temperature of
278 K – 360 K, preferably
280 K – 310 K,
in a high-speed mixer, preferably a high-speed stirrer, dissolver, colloid mill or a disperser, whereby the emulsifier, the emulsifier mixture and/or the wetting agent, wetting agent mixture and/or emulsifier/wetting agent mixture and dyes and/or colour pigments are dissolved or homogenously or almost homogenously distributed in one or both phases.

9. Method according to Claim 8, characterised in that the thorough mixing is carried out at such a speed (relative to the respective distance of the stirring mechanism from the boiler wall and the radius of the stirring mechanism) and for so long that the distribution of the emulsified resin particles has achieved a mean diameter in the range of
0.1–15 µm, preferably
0.5–4 µm.

10. Method according to Claims 8 and 9, characterised in that the thorough mixing is carried out at an edge speed and/or circumferential speed of
10–40 m/sec, preferably
15–30 m/sec.

11. Method according to one or more of Claims 8 to 10, characterised in that the water or the aqueous phase is introduced into the oily or oil-like phase (waterinsoluble, organic-chemical solvent and constituents dissolved therein) which are in the mixing vessel at a supply rate of
10–100 l/min., preferably
30–70 l/min.

12. Method according to one or more of Claims 8 to 11, characterised in that the diameter of the disc or the stirrer is 1/4 d to 3/4 d (d = diameter of the mixing vessel or boiler), preferably 0.3 d to 0.4 d.

13. Method according to one or more of Claims 8 to 12, characterised in that when using a colloid mill two or more constituents of the wood protection agent or the entire wood protection agent are supplied via a metering pump, the ratio of the oily phase to the aqueous phase with tenside (emulsifier and/or wetting agent) or oily phase with tenside to the aqueous phase is
20:1 to 1:1, preferably
5:1 to 2:1.

**Revendications**

1. Agent protecteur du bois constitué d'acide borique, d'un borate soluble dans l'eau, ou rendu soluble dans l'eau, d'un polyborate ou d'un composé formateur d'acide borique, de préférence de l'acide ortho-borique, du borate d'ammonium, un borate alcalin et/ou un polyborate alcalin, en des quantités pondérales de
0,1 à 15% en poids, de préférence
0,3 à 7% en poids,
et d'eau ainsi qu'éventuellement d'un additif, d'un solvant, d'un agent de solubilisation de l'acide borique ou des borates, de colorants et/ou de pigments colorés, caractérisé en ce que l'agent contient comme additif
1 à 35% en poids, de préférence
3 à 25% en poids (calculé à l'état de matière solide),
d'une résine alkyde ou d'un mélange de résines alkydes soluble dans des solvants organiques insolubles dans l'eau et ayant un indice d'acide (mesuré selon la norme DIN 53 402) compris entre 1 et 45, de préférence entre 2 et 20, une longueur d'huile de 30 à 75, de préférence de 40 à 70, et une proportion d'acide phtalique comprise entre 20 et 40% en poids, de préférence entre 25 et 35% en poids (par rapport à 100% en poids de la résine alkyde ou du mélange de résines alkydes), et/ou d'une huile végétale et/ou animale,
1,5 à 12% en poids, de préférence
2,5 à 7% en poids,
d'un émulsionnant, d'un mélange d'émulsionnants et/ou d'un agent mouillant, d'un mélange d'agents mouillants et/ou d'un mélange d'émulsionnant et d'agent mouillant,
0,05 à 5% en poids, de préférence
0,1 à 3% en poids,
d'ammoniac et/ou d'au moins une amine ou polyamine aliphatique soluble dans l'eau et/ou d'au moins un alcool mono- ou polyvalent et/ou d'une alkoxyamine ou d'une alkanolamine et comme constituant complémentaire (calculé sur 100% en poids d'agent protecteur du bois prêt à l'emploi) un mélange dissolvant consistant en eau et en un solvant organique ou mélange de solvants organiques insoluble dans l'eau, dans un rapport pondéral de 25:1 à 1:25, de préférence 10:1 à 1:10.

2. Agent protecteur du bois suivant la revendication 1 caractérisé en ce qu'il contient,
0,05 à 1,2% en poids, de préférence
0,1 à 0,8% en poids,
d'au moins un siccatif.

3. Agent protecteur du bois suivant une ou plusieurs revendications 1 et 2 caractérisé en ce que le mélange de solvants organiques insolubles dans l'eau comprend au moins un solvant aliphatique ou mélange de solvants aliphatiques, de préférence à base d'au moins un hydrocarbure aliphatique et au moins un solvant aromatique ou mélange de solvants aromatiques, dans un rapport pondéral de,
7:1 à 1:4, de préférence de
5,5:1 à 1:1.

4. Agent protecteur du bois suivant une ou plusieurs des revendications 1 à 3 caractérisé en ce que l'agent contient en outre comme additif,
0,5 à 2,5 moles, de préférence
1 à 2 moles,
par rapport à 1 mole de constituant bore (c'est-à-dire calculé en bore) d'un acide hydroxycarboxylique, de préférence multifonctionnel, formant un complexe avec l'acide borique ou un borate.

5. Agent protecteur du bois suivant une ou plusieurs des revendications 1 à 4, caractérisé en ce qu'il contient,
0,001 à 10% en poids, de préférence
0,1 à 7% en poids, d'un biocide organique ou mélange de biocides organiques.

6. Agent protecteur du bois suivant une ou plusieurs des revendications 1 à 5 caractérisé en ce qu'il contient,
1 à 35% en poids, de préférence
3 à 25% en poids, d'une huile végétale insaturée, de préférence de l'huile de lin et/ou de l'huile de soja,
1,5 à 12% en poids, de préférence
2,5 à 7% en poids,

d'un émulsionnant, d'un mélange d'émulsionnants et/ou d'un agent mouillant, d'un mélange d'agents mouillants et/ou d'un mélange d'émulsionnant et d'agent mouillant, le solde étant de l'eau ainsi qu'éventuellement des colorants et/ou des pigments colorés.

7. Agent protecteur du bois suivant une ou plusieurs des revendications 1 à 6 caractérisé en ce qu'il contient, comme acide hydroxycarboxylique, de l'acide salicylique, de l'acide citrique et/ou de l'acide tartrique.

8. Procédé de fabrication d'un agent protecteur du bois conforme à l'une ou plusieurs des revendications 1 à 7 caractérisé en ce que, à une température opératoire comprise entre
278 K et 360 K, de préférence
280 K et 310 K,
on mélange, dans un mélangeur à action rapide, de préférence un agitateur à marche rapide, un dissolveur, un moulin des colloïdes ou un disperseur, la résine alkyde ou le mélange de résines alkydes et/ou l'huile végétale ou animale ou le mélange d'huiles dans un solvant ou un mélange de solvants et/ou dans de l'eau (phase huileuse) avec les produits formant la phase aqueuse qui consistent de préférence en acide borique, en borate soluble dans l'eau ou rendu soluble dans l'eau, en polyborate ou en un composé formateur d'acide borique, ainsi qu'éventuellement en un additif, un agent de solubilisation, des additifs, des acides hydroxycarboxyliques et/ou d'autres additifs et/ou en eau, opération dans laquelle l'émulsionnant, le mélange d'émulsionnants et/ou l'agent mouillant, le mélange d'agents mouillants et/ou le mélange d'émulsionnant et d'agent mouillant ainsi que des colorants et/ou des pigments colorés sont dissous ou répartis de manière homogène ou quasi homogène dans l'une des phases ou dans les deux phases.

9. Procédé suivant la revendication 8 caractérisé en ce que l'opération de mélange est effectuée à une vitesse suffisante (par rapport aux distances respectives entre l'agitateur, la paroi du récipient et le rayon de l'agitateur) et pendant assez longtemps pour que la dispersion des particules de résine émulsifiées ait atteint un diamètre moyen de l'ordre de
0,1 à 15 $\mu$m, de préférence
0,5 à 4 $\mu$m.

10. Procédé suivant les revendications 8 et 9 caractérisé en ce que l'opération de mélange est effectuée à une vitesse marginale et/ou périphérique de
10 à 40 m/s, de préférence,
15 à 30 m/s.

11. Procédé suivant une ou plusieurs des revendications 8 à 10 caractérisé en ce que l'on introduit l'eau ou la phase aqueuse à une vitesse d'amenée de
10–100 l/min, de préférence
30–70 l/min, dans la phase huileuse ou oléagineuse (le solvant organique insoluble dans l'eau et les substances qui y sont dissoutes) qui a été placée au préalable dans le récipient de mélange.

12. Procédé suivant une ou plusieurs des revendications 8 à 11 caractérisé en ce que le diamètre du disque ou de l'agitateur est de 1/4 d à 3/4 d (d = diamètre du récipient ou de la cuve de mélange, de préférence de 0,3 d à 0, 4 d.

13. Procédé suivant une ou plusieurs des revendications 8 à 12 caractérisé en ce que lorsqu'on emploie un moulin des colloïdes l'introduction de deux ou plusieurs constituants de l'agent protecteur du bois ou de cet agent en totalité s'effectue via une pompe doseuse, le rapport entre la phase huileuse et la phase aqueuse contenant l'agent tensioactif (émulsionnant et/ou mouillant) ou entre la phase huileuse contenant l'agent tensioactif et la phase aqueuse étant alors de
20:1 à 1:1, de préférence
5:1 à 2:1.